(19) Europäisches Patentamt
European Patent Office
Office européen des brevets

(11) Veröffentlichungsnummer: **0 279 217 B1**

(12) **EUROPÄISCHE PATENTSCHRIFT**

(45) Veröffentlichungstag der Patentschrift: **11.03.92**

(51) Int. Cl.⁵: **C08G 75/02**

(21) Anmeldenummer: **88100989.8**

(22) Anmeldetag: **23.01.88**

(54) **Verfahren zur Herstellung von Polyarylensulfiden mit regelbaren Schmelzviskositäten.**

(30) Priorität: **06.02.87 DE 3703550**

(43) Veröffentlichungstag der Anmeldung:
**24.08.88 Patentblatt 88/34**

(45) Bekanntmachung des Hinweises auf die Patenterteilung:
**11.03.92 Patentblatt 92/11**

(84) Benannte Vertragsstaaten:
**BE DE FR GB IT**

(56) Entgegenhaltungen:
**EP-A- 0 053 344**
**EP-A- 0 125 600**
**EP-A- 0 214 470**
**EP-A- 0 215 273**

(73) Patentinhaber: **BAYER AG**

**W-5090 Leverkusen 1 Bayerwerk(DE)**

(72) Erfinder: **Dorf, Ernst-Ulrich, Dr.**
**Bodelschwinghstrasse 16**
**W-4150 Krefeld(DE)**
Erfinder: **Glock, Volker, Dr.**
**Buschstrasse 167**
**W-4150 Krefeld(DE)**
Erfinder: **Ostlinning, Edgar, Dr.**
**Rembrandtstrasse 37**
**W-4000 Düsseldorf 1(DE)**

EP 0 279 217 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von gegebenenfalls verzweigten Polyarylensulfiden (PPS) aus Alkalisulfiden und Dihalogenaromaten in einem polaren Lösungsmittel in Gegenwart von 0,05 bis 10,0 Mol-%, bevorzugt 0,1 bis 5 Mol-% eines aromatischen Thioethers. Die so erhaltenen Polyarylensulfiden mit definierten Schmelzviskositäten zeichnen sich durch eine hohe Stabilität der Schmelze, geringen Chlorgehalt und geringe Korrosion aus.

Polyarylensulfiden und ihre Herstellung sind bekannt (z.B. US-PS 2 513 188, 3 117 620). Diese können bei ausreichend hoher Schmelzviskosität thermoplastisch, z.B. zu Spritzgußteilen, Folien und Fasern verarbeitet werden. Damit Polyphenylensulfide ausreichende Schmelzviskositäten besitzen, können z.B. bei der Herstellung bestimmte Zusätze zur Polymerisationslösung gegeben werden oder über einen separaten und zusätzliche Nachkondensation bzw. Härtung (Curing) die Schmelzviskosität der hergestellten Polyphenylensulfide gesteigert werden.

Es ist bekannt, daß die Zugabe von anorganischen oder organischen Salzen zum Umsetzungsgemisch der Polymerisation zur Erniedrigung des Schmelzflusses bzw. zur Erhöhung der Schmelzviskosität der gewonnenen Polyphenylensulfide führt.

So wurden z.B. Alkalicarboxylate (DE-AS 253 749), Lithiumhalogenide oder Alkalicarboxylate (DE-OS 2 623 362), Lithiumchlorid oder Lithiumcarboxylat (DE-OS 2 623 363), Alkalicarbonate in Kombination mit Alkalicarboxylaten (US-PS 4 038 259), Lithiumacetat (DE-OS 2 623 333), Trialkaliphosphate (DE-OS 2 930 797), Alkalifluoride (DE-OS 3 019 732), Alkalisulfonate (US-PS 4 038 260), Lithiumcarbonat und Lithiumborat als Katalysatoren (US-PS 4 030 518) bei der Polymerisation zugesetzt.

Aus der DE-OS 3 120 538 ist bekannt, außerdem Polyarylensulfide mit hohen Schmelzviskositäten durch Zugabe von N,N-Dialkylcarbonsäureamiden zum Umsetzungsgemisch zu erhalten.

Es wurde nun gefunden, daß durch Zugabe bestimmter aktivierter aromatischer Thioether zum Reaktionsgemisch Polyarylensulfide erhalten wurden, die reproduzierbar einstellbare Schmelzviskosität besitzen, sich durch eine hohe Stabilität der Schmelze, geringen Chlorgehalt und geringe Korrosion bei der Verarbeitung auszeichnen. Auf diese Weise kann z.B. auch PPS mit hohem Schmelzfluß erzeugt werden, das direkt thermoplastisch verarbeitbar ist.

Gegenstand der Erfindung ist daher ein Verfahren zur Herstellung von gegebenenfalls verzweigten Polyarylensulfiden aus

a) 50 bis 100 Mol-% Dihalogenaromaten der Formel

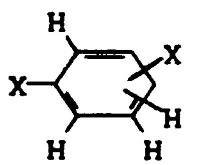

(I),

und 0 bis 50 Mol-% Dihalogenaromaten der Formel

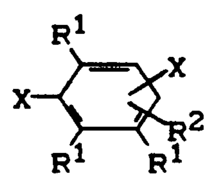

(II),

in denen

X für zueinander meta- und para-ständiges Halogen wie Chlor oder Brom steht und

$R^1$ und $R^2$ gleich oder verschieden ist und Wasserstoff $C_1$-$C_4$-Alkylaryl, $C_5$-$C_{10}$-Cycloalkyl, $C_6$-$C_{10}$-Aryl, $C_7$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist,

und

b) 0 bis 5 Mol-%, bevorzugt 0,1 bis 2,5 Mol-%, bezogen auf die Summe der Dihalogenaromaten der Formel (I) und (II), eines Tri- oder Tetrahalogenaromaten der Formel (III)

$ArX_n$ (III),

in welcher

- Ar ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,
- X für Halogen wie Chlor oder Brom steht und
- n für die Zahl 3 oder 4 steht

und

c) 50 bis 100 Mol-% Alkalisulfid, bevorzugt Natrium-oder Kaliumsulfid oder deren Mischung, z.B. in Form ihrer Hydrate oder wäßrigen Mischungen, gegebenenfalls zusammen mit geringen Mengen Alkalihydroxiden wie Natrium- und Kaliumhydroxid und 0 bis 50 Mol-% Alkalisulfid, bevorzugt Natrium- und Kaliumhydrogensulfid, oder deren Mischung, wobei das molare Verhältnis von (a + b):c im Bereich von 0,75:1 bis 1,25:1 liegt

und

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten, N,N-Dialkylcarbonsäureamiden, Lactamen, Anhydriden und Estern von Carbonsäuren,

in einem polaren organischen Lösungsmittel,

dadurch gekennzeichnet, daß dem Reaktionsgemisch aromatische Thioether der Formeln (IV) und/oder (V)

$Ar\text{-}S\text{-}Ar^1$ (IV),
$Ar^1\text{-}S\text{-}Ar^2$ (V),

in Mengen von 0,05 bis 10,0 Mol-%, vorzugsweise 0,1 bis 5,0 Mol-%, zugegeben werden, bezogen auf die Summe der Mole der Dihalogenaromaten der Formel (I) und (II),

wobei in den Formeln (IV) und (V)

Ar einen aromatischen oder heterocyclischen Rest mit 6 bis 30 Atomen bedeutet, z.B.

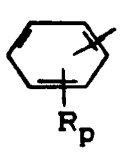 , 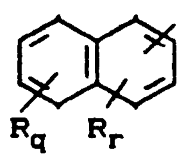 , 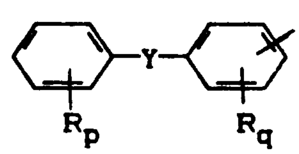 ,

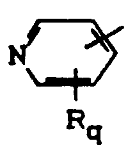 , 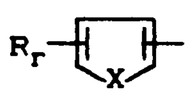 , 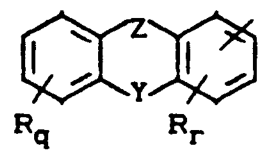 (VI),

und

$Ar^1$ und $Ar^2$ jeweils unabhängig voneinander einen aktivierten Aromaten mit 6 bis 30 Atomen der Formel (VII) bedeutet

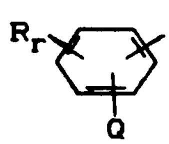 (VII),

in welchen die Reste R jeweils unabhängig voneinander $C_1$-$C_8$-Alkyl, $C_7$-$C_{19}$-Aralkyl/Alkaryl, $C_3$-$C_6$-Cycloalkyl oder Wasserstoff bedeuten und

- Z und Y gleich oder verschieden sein können und $C_1$-$C_6$-Alkyliden, $C_3$-$C_6$-Cycloalkyliden, -CO-, -S-, $-SO_2-$, -O-, -NR- oder eine Einfachbindung bedeuten,
- X -NR-, -S- oder -O- bedeutet,
- Q ein aktivierender organischer Substituent ausgewählt aus der Gruppe -SAr, -CO-R, -SO-R, $-SO_2$-R, -COOAr-, -Ar, -CN und $-CF_3$ ist, wobei Ar und R die Formel (IV) und (VI)

angegebene Bedeutung haben, und

p für die Zahl 0, 1, 2, 3, 4 oder 5,

q für die Zahl 0, 1, 2, 3 oder 4 und

r für die Zahl 0, 1, 2, oder 3 steht.

Die Alkalisulfide können in Form ihrer Hydrate und wäßrigen Mischungen oder wäßrigen Lösungen eingesetzt werden. Die Entwässerung kann partiell sein, erfolgt aber vorzugsweise vollständig. Das im Umsetzungsgemisch vorhandene Wasser wird aus dem Ansatz destilliert. Die Wasserdestillation kann direkt oder mit Hilfe von Azeotropbildnern, wobei bevorzugt als Azeotropbildner die Dihalogenaromaten selbst eingesetzt werden, erfolgen. Für die Entwässerung können alle Reaktionspartner gemischt werden und dann die Entwässerung des Gesamtgemisches durchgeführt werden. Das Alkalisulfid kann auch separat mit einem Teil der Reaktionskomponenten oder alleine entwässert werden.

In einer Ausführungsform der Reaktion werden die Reaktionspartner zusammen mit dem Reaktionsbeschleuniger bzw. einem Gemisch von Reaktionsbeschleunigern in Anwesenheit des polaren Lösungsmittels kontinuierlich unter gleichzeitiger Entfernung des Wassers zusammengeführt. Bei dieser Verfahrensweise kann eine einsetzende Umsetzung über die Dosierungsraten gesteuert werden. Längere Verweilzeiten des Wassers können so vermieden werden.

Es können auch vollständig wasserfreie Alkalisulfide bzw. -hydrogensulfide eingesetzt werden. Sie können beispielsweise in einem separaten Verfahrensschritt entwässert worden sein. Die Sulfide können vorgelegt oder zu beliebigen Zeiten der Reaktion zudosiert werden.

Wird völlig entwässert oder wasserfreies Alkalisulfid bzw. -hydrogensulfid verwendet, so kann druckfrei bzw. druckarm bis zu ca. 3 bar Druck umgesetzt werden. Zur Erzielung von höheren Reaktionstemperaturen über den Siedepunkt des Lösungsmittels bzw. der Mischung aus Lösungsmittel und Di- und Polyhalogenaromaten hinaus kann höherer Druck bis zu 50 bar angewendet werden.

Die Reaktion kann kontinuierlich und diskontinuierlich durchgeführt werden. Die Reaktionszeit kann innerhalb einer weiteren Spanne variiert werden. Sie kann 1 bis 48 Stunden, bevorzugt 1 bis 18 Stunden betragen. Die Reaktionstemperaturen betragen 150 bis 300 ° C, vorzugsweise 170 bis 280 ° C.

Die Zugabe des aktivierten aromatischen Thioethers kann in verschiedener Art erfolgen. Dieser kann vorgelegt oder während der Reaktions- oder Nachkondensationszeit kontinuierlich zudosiert werden oder in bestimmten Zeiträumen der Reaktions- oder Nachrührphase zudosiert oder portionsweise zugegeben werden. In allen Fällen können sowohl einzelne definierte Verbindungen als auch Gemische aus verschiedenen aktivierten aromatischen Thioethern verwendet werden.

Die erfindungsgemäß hergestellten Polyarylensulfide zeichnen sich durch definierte Schmelzviskositäten aus, die innerhalb eines bekannten Bereiches reproduziert werden können. Das ist insofern von Vorteil, da zur Verarbeitung der Polyarylensulfide Polymerschmelzen mit unterschiedlichen Fließverhalten eingestellt werden müssen, die dem jeweiligen Verwendungszweck angepaßt sein sollen.

So können, z.B. zur Herstellung von Folien und Fasern höhere Schmelzviskositäten als zur Einstellung von Glasfaser-bzw. Glasfaser/Mineral-verstärkten Spritzgußtypen notwendig sein. Produkte mit hohem Schmelzfluß, die trotzdem thermoplastisch verarbeitbar sind, sind für komplizierte Formteile und zur Verkapselung elektronischer Bauteile geeignet.

Ein weiterer Vorteil der erfindungsgemäß hergestellten Polyarylensulfide ist ihre größere Stabilität bei thermischer Belastung. Weiterhin kann das bei der thermoplastischen Verarbeitung anfallende Regenerat nach der Verarbeitung wieder neu eingesetzt werden.

Die Aufarbeitung des Umsetzungsgemisches und die Isolierung der Polyarylensulfide können in bekannter Weise erfolgen.

Das Polyarylensulfid kann direkt aus der Reaktionslösung oder erst z.B. nach Zugabe von Wasser und/oder verdünnten Säuren oder organischen Lösungsmitteln mit geringer Löslichkeit für Polyarylensulfide nach üblichen Verfahrensweisen abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die Alkalisulfide können z.B. auch aus $H_2S$ und den Alkalihydroxiden erhalten werden.

Je nach Anteil an Alkalihydrogensulfid, das als Verunreinigung im Alkalisulfid in der Reaktionslösung enthalten ist, können zusätzlich bestimmte Anteile Alkalihydroxid zudosiert werden. Gegebenenfalls können anstelle der Alkalihydroxide solche Verbindungen zugegeben werden, die unter den Reaktionsbedingungen Alkalihydroxide abspalten bzw. bilden.

Erfindungsgemäß können meta- und para-Dihalogenaromaten der Formel (I) bzw. (II) eingesetzt werden.

In diesem Fall kann das Verhältnis meta- zu para-Dihalogenaromaten bis zu 30:70 betragen.

Zur Erhaltung von thermoplastisch verarbeitbaren Polyphenylsulfiden werden bevorzugt p-Dihalogenaromaten eingesetzt.

Sollen verzweigte Polyarylensulfide hergestellt werden, sollten mindestens 0,05 Mol-% eines Tri- oder Tetrahalogenaromaten der Formel (III) eingesetzt werden.

Beispiele für erfindungsgemäß einzusetzende Dihalogenaromaten der Formel (I) sind: 1,4-Dichlorbenzol, 1,4-Dibrombenzol, 1-Chlor-4-brombenzol, 1,3-Dichlorbenzol, 1,3-Dibrombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,4-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol, 2,4-Dichlortoluol, 2,4-Dichlorxylol, 2,4-Dibromcumol und 1-Cyclohexyl-2,5-dichorbenzol. Sie sind allein oder im Gemisch miteinander einsetzbar.

Beispiele für erfindungsgemäß einzusetzende Tri- bzw. Tetrahalogenaromaten er Formel (III) sind: 1,2,3-Trichlorbenzol, 1,2,4-Trichlorbenzol, 1,2,4-Tribrombenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbisphenyl, 1,3,5-Trichlortriazin.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3 bis 11 C-Atomen, die gegebenenfalls Substituenten am Kohlenstoffgerüst tragen können, die unter Reaktionsbedingungen inert sind.

Beispielsweise finden als N-Alkyllactame Verwendung N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Methyl-2,4,5-trimethyl-2-pyrrolidon, N-Methyl-2-piperidon, N-Ethyl-2-piperidon, N-Isobutyl-2-piperidon, N-Methyl-6-methyl-2-piperidon, N-Methyl-3-ethyl-2-piperidon.

Es können Mischungen der Lösungsmittel gewählt werden.

Erfindungsgemäß einsetzbare aktivierte aromatische Thioether sind beispielsweise 2-Benzoyldiphenylsulfid, 3-Benzoyldiphenylsulfid, 4-Benzoyldiphenylsulfid, 2,2'-Dibenzoyldiphenylsulfid, 2,3'-Dibenzoyldiphenylsulfid, 2,4'-Dibenzoyldiphenylsulfid, 3,4'-Dibenzoyldiphenylsulfid, 4,4'-Dibenzoyldiphenylsulfid, 2-(Phenylthio)diphenylsulfid, 3-(Phenylthio)diphenylsulfid, 4-(Phenylthio)diphenylsulfid, 2,2'-Di(phenylthio)-diphenylsulfid, 2,3'-Di(phenylthio)diphenylsulfid, 2,4'-Di(phenylthio)diphenylsulfid, 3,4'-Di(phenylthio)-diphenylsulfid, 4,4'-Di(phenylthio)diphenylsulfid, 4-Biphenylphenylsulfid, 4-Terphenylphenylsulfid, 2-(Phenylthio)benzoesäurephenylester, 3-(Phenylthio)benzoesäurephenylester, 4-(Phenylthio)-benzoesäurephenylester,2-(Phenylthio)diphenylsulfoxid, 3-(Phenylthio)diphenylsulfoxid, 4-(Phenylthio)-diphenylsulfoxid, 2-(Phenylthio)diphenylsulfon, 3-(Phenylthio)diphenylsulfon und 4-(Phenylthio)-diphenylsulfon.

Vorzugsweise werden 4-Benzoyldiphenylsulfid, 4,4'-Dibenzoyldiphenylsulfid, 4-(Phenyl)thiodiphenylsulfid und 4,4'-Di(phenylthio)diphenylsulfid eingesetzt.

Die Reaktion kann gegebenenfalls zusätzlich in Anwesenheit von üblichen Reaktionsbeschleunigern wie Alkalicarboxylaten (DE-AS 2 453 749), Lithiumhalogeniden oder Alkalicarboxylaten (DE-OS 2 623 362), Lithiumchlorid oder Lithiumcarboxylat (DE-OS 2 623 363), Alkalicarbonaten in Kombination mit Alkalicarboxylaten (US-PS 4 038 259), Lithiumacetat (DE-OS 2 623 333), Trialkaliphosphaten (DE-OS 2 930 710), Trialkaliphosphonaten (DE-OS 2930 797), Alkalifluoriden (DE-OS 3 019 732), Alkali-Lithiumborat (US 4 030 518), Aminosäuren (DE-OS 3 428 984), definierten Mengen Lactam (DE-OS 3 428 986) und N,N-Dialkylcarbonsäureamiden durchgeführt werden.

Die erfindungsgemäß hergestellten Polyarylensulfide können mit anderen Polymeren wie Pigmenten und Füllstoffen - beispielsweise Graphit, Metallpulver, Glaspulver, Quarzmehl, Glasfasern oder Kohlefasern - gemischt oder mit den für Polyarylensulfiden üblichen Additiven, beispielsweise üblichen Stabilisatoren oder Entformungsmitteln, zugesetzt werden. Im allgemeinen wird das Schmelzfließverhalten von Polyarylensulfiden nach ASTM 1238-70 bei 316 °C unter Verwendung eines 5 kg Gewichtes gemessen und in g/10 min angegeben. Auch bei hohen Schmelzflußwerten kann die Messung der Schmelzviskosität $\eta_m$ der Polymerschmelze (in Pa.s) bei 306 °C in Abhängigkeit von der Schubspannung (in Pa) mit Hilfe des Instron-Rotationsviskosimeters bestimmt werden.

Man kann auf diese Weise die Schmelzviskosität in einem sehr weiten Bereich von $10^1$ bis $10^7$ Pa.s bestimmen. In dem Instron-Rheometer wird das Polymer zwischen einer festen Platten und einem drehbaren Kegel geschmolzen und der Winkelgeschwindigkeit und den apparativen Daten kann die Schmelzviskosität in Abhängigkeit von der Schubspannung errechnet werden. Verwendet wurde das Rheometer-Modell 3250 der Firma Instron, Durchmesser des Kegels und der Platte 2 cm. Angegeben wird die Schmelzviskosität, die bei einer Schubspannung von $\tau = 10^2$ Pa gemessen wird.

Die erfindungsgemäß hergestellten Polyarylensulfide besitzen nach der Isolierung aus dem Reaktionsgemisch Schmelzviskositäten zwischen 1 und 5 x $10^3$, vorzugsweise 5 bis 1 x $10^3$ Pa.s. Sie können in der üblichen Weise verarbeitet werden. Erhalten werden dabei Folien, Fasern und vorzugsweise Spritzgießmassen. Diese können Verwendung finden z.B. als Automobilteile, Armaturen, Elektroteile, z.B. Schalter, elektronische Tafeln, chemikalienresistente und witterungsstabile Teile und Apparate wie Pumpengehäuse und Pumpenflügelräder, Ätzbadschalen, Dichtungsringe, Teile von Büromaschinen und Fernmeldeeinrichtungen sowie als Haushaltsgeräte, Ventile, Kugellagerteile, Einbettmassen für elektronische Bauteile etc..

## Beispiele

### Beispiel 1 (Vergleichsversuch)

Dieses Beispiel beschreibt zum Vergleich die Herstellung von Polyphenylensulfid gemäß US-PS 3 354 129
In einem mit Rührer ausgerüsteten Autoklaven wurden 129 g Natriumsulfid-tri-hydrat (entsprechend 1 mol $Na_2S$) und 300 g N-Methyl-2-pyrrolidon zusammengegeben. Das Gemisch wurde mit Stickstoff gespült und langsam bis auf 202°C erwärmt. Dabei destillierten insgesamt 19 ml Wasser ab. Der Ansatz wurde anschließend auf ca. 160°C heruntergekühlt und 147 g p-Dichlorbenzol (= 1 Mol) in ca. 50 g N-Methyl-2-pyrrolidon hinzugefügt. Man erwärmt das Reaktionsgemisch unter dem Stickstoffvordruck von 2,5 bar in 30 min auf 245°C, wobei der Druck auf ca. 12 bar anstieg. Nach dem Abkühlen auf Raumtemperatur wird ein grauer Feststoff isoliert, der anschließend einer sorgfältigen Wasserwäsche zur Entfernung der anorganischen Beimengen unterworfen wird.

Man trocknet bie 80°C im Vakuum und erhält 100,3 g (93 % Poly-p-phenylensulfid mit einer Schmelzviskosität von $\eta_m = 4{,}5$ Pa.s (gemessen bei $\tau = 10^2$ Pa und 306°C).

Der Gesamtchlorgehalt beträgt 0,56 % (bestimmt durch Wickbold-Verbrennung).

### Beispiel 2

Zu 2700 g N-Methylcaprolactam, 1223,1 g p-Dichlorbenzol und 50,2 g (1,5 Mol-%) 4,4'-Di(phenylthio)-diphenylsulfid wurden

| | |
|---|---|
| 325 g | Wasser |
| 1147,5 g | Natriumsulfidhydrat (ca. 60 %ig) |
| 4,3 g | Natronlauge und |
| 141,2 g | Caprolactam |

bei einer Temperatur von 215°C zudosiert.

Die Zudosierrate richtet sich nach dem Umsatz und wird so eingestellt, daß die Temperatur von 215°C bei gleichzeitiger zusätzlicher Beheizung des Reaktionsgefäßes eingehalten werden kann. Bei der Dosierung wird gleichzeitig das Wasser aus der Reaktion entfernt.

Nach der Dosierung hält man die Reaktion weitere 9 Stunden auf Rückfluß. Danach wird das PPS in Isopropanol ausgefällt, mit Wasser elektrolytfrei gewaschen und im Vakuumtrockenschrank bei 100°C getrocknet. Das getrocknete p-Polyphenylensulfid (858,8 g = 90,5 % Ausbeute) hat eine Schmelzviskosität von 13 Pa.s (gemessen bei $10^2$ Pa und 306°C). Der Gesamtchlorgehalt beträgt 0,13 % (Wickbold-Verbrennung).

### Beispiel 3

Wie Beispiel 2, aber mit 100,5 (3 Mol-%) 4,4'-Di(phenylthio)diphenylsulfid
Ausbeute: 977,2 g = 97,7 %
$\eta_m = 2{,}5$ Pa.s ($10^2$ Pa und 306°C) Gesamtchlor: 0.12 % (Wickbold)

### Beispiel 4

Wie Beispiel 2, aber statt 50,2 g 4,4'-Di(phenylthio)diphenylsulfidwurden 36,7 g (1,5 Mol-%) 4-(Phenylthio)diphenylsulfid eingesetzt.
Ausbeute: 833,1 g = 89,0 %
$\eta_m$ = 49 Pa.s ($10^2$ Pa und 306 °C) Gesamtchlor: 0.14 %

Beispiel 5

Wie Beispiel 4, aber mit 73,5 g 4-(Phenylthio)diphenylsulfid:
Ausbeute: 871,5 = 90,0 %
$\eta_m$ = 30 Pa.s ($10^2$ Pa und 306 °C) Gesamtchlor: 0,18 %

Beispiel 6

Wie Beispiel 2, aber statt 50,2 g 4,4-Di(phenylthio)diphenylsulfid wurden 36,2 g (1,5 Mol-%) 4-Benzoyldiphenylsulfid eingesetzt.
Ausbeute: 730,5 g = 78 % (Ein Teil der Ausbeute ging bei der Aufarbeitung verloren).
$\eta_m$ = Pa.s ($10^2$ Pa und 306 °C)
Gesamtchlor: 0,22 %

Beispiel 7

Korrosion der PPS-Typen der Beispiele 1 bis 6

Die Korrosion wurde durch Titration von sauren Ausgasungen, die durch Erhitzen der Polyphenylsulfidprobe im Luftstrom bei 350 °C in 1 Stunde in einem Auffanggefäß mit Waser erhalten wurden, mit einer normalen Natronlauge bestimmt.

Tabelle 1

| Beispiel | ml 1n-NaOH |
|---|---|
| 1 | (Vergl.) 5,25 |
| 2 | n.b. |
| 3 | 3,45 |
| 4 | 3,55 |
| 5 | 3,50 |
| 6 | 3,25 |

Beispiel 8

Stabilität der Schmelzen

Die Polyphenylensulfide aus Beispiel 1 (Vergleichsbeispiel) sowie Beispiele 2 bis 6 wurden bei 300 °C unter Luftausschluß aufgeschmolzen und 15 min bei dieser Temperatur gehalten. Anschließend wurde eine probe der Schmelze am Rotationsviskosimeter bei $10^2$ Pa und 306 °C vermessen. Diese Prozedur wurde mit dem minimal aufgeschmolzenen Material noch einmal wiederholt. Tabelle 2 zeigt, daß die erfindungsgemäß hergestellten Polyphenylensulfide im Vergleich zu dem nicht erfindungsgemäßen Vergleichsmaterial (Beispiel 1) eine hohe Stabilität der Schmelze besitzen:

Tabelle 2

| | $\eta_m$* Ausgang | $\eta_m$* 1.Schmelze | $\eta_m$* 2.Schmelze |
|---|---|---|---|
| Beispiel 1 (Vergleich) | 4,5 | 70 | 320 |
| Beispiel 2 | 13 | 13 | 15 |
| Beispiel 3 | 2,5 | 3 | 3 |
| Beispiel 4 | 49 | 48 | 52 |
| Beispiel 5 | 30 | 32 | 35 |
| Beispiel 6 | 0,2 | 1,9 | 3,0 |

*) Schmelzviskosität $\eta_m$ gemessen in Pa.s bei $10^2$ Pa und 306 ° C.

## Patentansprüche

**1.** Verfahren zur Herstellung von gegebenenfalls verzweigten Polyarylensulfiden aus

a) 50 bis 100 Mol-% Dihalogenaromaten der Formel

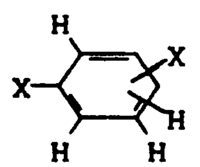

(I),

und 0 bis 50 Mol-% Dihalogenaromaten der Formel

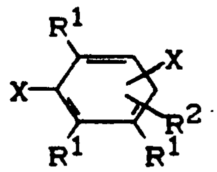

(II),

in welcher

X für zueinander meta- und para-ständiges Halogen wie Chlor oder Brom steht und

$R^1$ und $R^2$ gleich oder verschieden ist und Wasserstoff $C_1$-$C_4$-Alkylaryl, $C_5$-$C_{10}$-Cycloalkyl, $C_6$-$C_{10}$-Alkylaryl, $C_7$-$C_{14}$-Arylalkyl sein kann, wobei zwei zueinander orthoständige Reste $R^1$ zu einem aromatischen oder heterocyclischen, bis zu drei Heteroatomen wie N, O, S enthaltenden Ring verknüpft sein können und immer ein Rest $R^1$ verschieden von Wasserstoff ist,

und

b) 0 bis 5 Mol-%, bezogen auf die Summe der Dihalogenaromaten der Formel (I) und (II), eines Tri- oder Tetrahalogenaromaten der Formel (III)

$ArX_n$ (III),

in welcher

Ar ein aromatischer $C_6$-$C_{14}$-Rest oder ein heterocyclischer Rest mit 5 bis 14 Ringatomen ist, wobei bis zu 3 Ring-C-Atome durch Heteroatome wie N, O, S ersetzt sein können,

X für Halogen wie Chlor oder Brom steht und

n für die Zahl 3 oder 4 steht

und

c) 50 bis 100 Mol-% Alkalisulfid, gegebenenfalls in Form ihrer Hydrate oder wäßrigen Mischungen, gegebenenfalls zusammen mit geringen Mengen Alkalihydroxiden wie Natrium- und Kaliumhydroxid und 0 bis 50 Mol-% Alkalibisulfid, bevorzugt Natrium- und Kaliumhydrogensulfid, oder deren Mischung, wobei das molare Verhältnis von (a + b):c im Bereich von 0,75:1 bis 1,25:1 liegt

und

d) gegebenenfalls in Anwesenheit von Reaktionsbeschleunigern wie Alkalicarboxylaten, Alkaliphosphaten, Alkaliphosphonaten, Alkalifluoriden, Alkalialkylsulfonaten bzw. in Anwesentheit von N,N-Dialkylcarbonsäureamiden, Lactamen, Anhydriden und Estern von Carbonsäuren,

in einem polaren organischen Lösungsmittel,

dadurch gekennzeichnet, daß dem Reaktionsgemisch aktivierte aromatische Thioether der Formeln (IV) und/oder (V)

$Ar\text{-}S\text{-}Ar^1$ (IV),

$Ar^1\text{-}S\text{-}Ar^2$ (V),

in Mengen von 0,05 bis 10,0 Mol-%, zugegeben werden, bezogen auf die Summe der Mole der Dihalogenaromaten der Formel (I) und (II)

wobei in den Formeln (IV) und (V)

Ar einen aromatischen oder heterocyclischen Rest mit 6 bis 30 Atomen bedeutet,

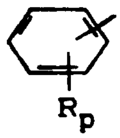 , 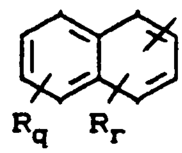 , 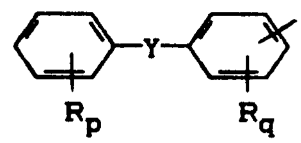 ,

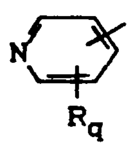 , 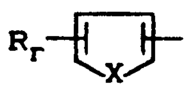 , 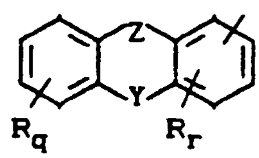 (VI),

und

$Ar^1$ und $Ar^2$ jeweils unabhängig voneinander einen aktivierten Aromaten mit 6 bis 30 Atomen der Formel (VII) bedeutet

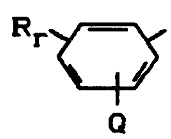 (VII),

in welchen die Reste R jeweils unabhängig voneinander $C_1$-$C_8$-Alkyl, $C_7$-$C_{14}$-Aralkyl/Alkaryl, $C_3$-$C_6$-Cycloalkyl oder Wasserstoff bedeuten und

- Z und Y gleich oder verschieden sein können und $C_1$-$C_6$-Alkyliden, $C_3$-$C_6$-Cycloalkyliden, -CO-, -S-, $-SO_2-$, -O-, -NR- oder eine Einfachbindung bedeuten,
- X -NR-, -S- oder -O- bedeutet,
- Q ein aktivierender organischer Substituent ausgewählt aus der Gruppe -SAr, -CO-R, -SO-R, $-SO_2-R$, -COOAr-, -Ar, -CN und $-CF_3$ ist, wobei Ar und R die bei Formel (IV) und (VI) angegebene Bedeutung haben, und
- p für die Zahl 0, 1, 2, 3, 4 oder 5,
- q für die Zahl 0, 1, 2, 3 oder 4 und
- r für die Zahl 0, 1, 2 oder 3 steht.

**2.** Verfahren nach Anspruch 1, dadurch gekennzeichnet, daß 0,1 bis 5 Mol-% des aktivierten aromatischen Thioethers nach Formel (IV) oder (V) eingesetzt werden.

**3.** Verfahren nach Anspruch 1, dadurch gekennzeichnet, daß die Reaktionspartner und das polare organische Lösungsmittel einzeln oder in Mischungen bzw. Lösungen bei Temperaturen >200 °C unter gleichzeitiger Entwässerung zusammengeführt und zur Reaktion gebracht werden.

**4.** Verfahren nach Anspruch 1, dadurch gekennzeichnet, daß die Reaktionspartner und das polare

organische Lösungsmittel wasserfrei einzeln oder in Mischungen bzw. Lösungen zusammengeführt und bei Temperaturen > 200 °C zur Reaktion gebracht werden, wobei die Zusammenführung vor oder im Verlauf der Reaktion durchgeführt werden kann.

**5.** Verfahren nach Anspruch 3, dadurch gekennzeichnet, daß die Reaktion in Abwesenheit von Wasser durchgeführt wird.

**6.** Verfahren nach Anspruch 1, dadurch gekennzeichnet, daß 4-(Phenylthio)diphenylsulfid als aktivierter aromatischer Thioether Verwendung findet.

**7.** Verfahren nach Anspruch 1, dadurch gekennzeichnet, daß 4,4′-Di(phenylthio)diphenylsulfid als aktivierter aromatischer Thioether Verwendung findet.

**8.** Verfahren nach Anspruch 1, dadurch gekennzeichnet, daß 4-Benzoyldiphenylsulfid als aktivierter aromatischer Thioether Verwendung findet.

## Claims

**1.** A process for the production of optionally branched polyarylene sulfides from

a) 50 to 100 mol-% aromatic dihalogen compounds corresponding to the following formula

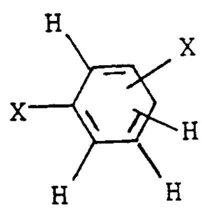

(I)

and 0 to 50 mol-% aromatic dihalogen compounds corresponding to the following formula

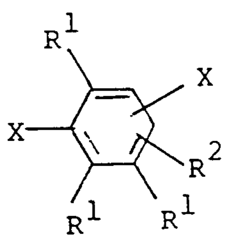

(II)

in which

X represents halogens, such as chlorine or bromine, in the meta or para position to one another and

$R^1$ and $R^2$ may be the same or different and represent hydrogen, $C_{1-4}$ alkylaryl, $C_{5-10}$ cycloalkyl, $C_{6-10}$ alkylaryl, $C_{7-14}$ arylalkyl; two substituents $R^1$ in the ortho position to one another may be attached to form an aromatic or heterocyclic ring containing up to three hetero atoms, such as N, O, S, one of the substituents $R^1$ always being different from hydrogen,

and

b) 0 to 5 mol-%, based on the sum of the aromatic dihalogen compounds corresponding to formulae (I) and (III), of an aromatic trihalogen or tetrahalogen compound corresponding to the following formula

$ArX_n$ (III)

in which

Ar is an aromatic $C_{6-14}$ radical or a heterocyclic radical containing from 5 to 14 ring carbon atoms, up to 3 ring carbon atoms being replaceable by hetero atoms, such as N, O, S,

X represents halogen, such as chlorine or bromine, and n is the number 3 or 4

and

c) 50 to 100 mol-% alkali metal sulfide, optionally in the form of the hydrates or aqueous mixtures, optionally together with small quantities of alkali metal hydroxides, such as sodium and potassium hydroxide, and 0 to 50 mol-% alkali metal bisulfide, preferably sodium and potassium hydrogen sulfide, or mixtures thereof, the molar ratio of (a + b):c being in the range from 0.75:1 to 1.25:1, and

d) optionally in the presence of reaction accelerators, such as alkali metal carboxylates, alkali metal phosphates, alkali metal phosphonates, alkali metal fluorides, alkali metal alkyl sulfonates, or in the presence of N,N-dialkyl carboxylic acid amides, lactams, anhydrides and esters of carboxylic acids in a polar organic solvent,

characterized in that

activated aromatic thioethers corresponding to formulae (IV) and/or (V) below:

Ar-S-$Ar^1$ (IV)

$Ar^1$-S-$Ar^2$ (V)

are added to the reaction mixture in quantities of from 0.05 to 10 mol-%, based on the sum of the mols of the aromatic dihalogen compounds corresponding to formulae (I) and (II);

in formulae (IV) and (V),

Ar is an aromatic or heterocyclic radical containing from 6 to 30 carbon atoms,

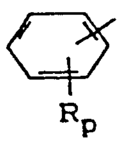 , 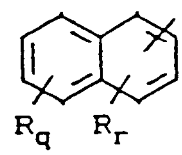 , 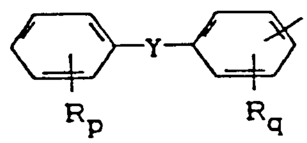 ,

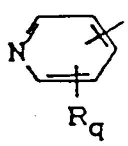 , 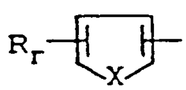 , 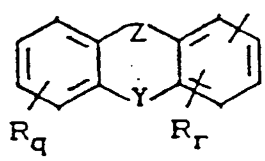 (VI),

and

$Ar^1$ and $Ar^2$ independently of one another represent an activated $C_{6-30}$ aromatic radical corresponding to the following formula

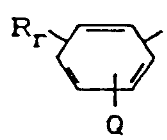 (VII),

in which the substituents R independently of one another represent $C_{1-8}$ alkyl, $C_{7-14}$ aralkyl/alkaryl, $C_{3-6}$ cycloalkyl or hydrogen and

Z and Y may be the same or different and represent $C_{1-6}$ alkylidene, $C_{3-6}$ cycloalkylidene, -CO-, -S-, -$SO_2$-, -O-, -NR- or a single bond,

X represents -NR-, -S- or -O-,

Q is an activating organic substituent selected from the group comprising -SAr-, -CO-R, -SO-R, -$SO_2$R, -COOAr, -Ar, -CN and -$CF_3$, Ar and R having the same meaning as in formulae (IV) and (VI), and

p is the number 0, 1, 2, 3, 4 or 5,

q is the number 0, 1, 2, 3 or 4 and

r is the number 0, 1, 2 or 3.

**2.** A process as claimed in claim 1, characterized in that a quantity of 0.1 to 5 mol-% of the activated aromatic thioether corresponding to formula (IV) or (V) is used.

3. A process as claimed in claim 1, characterized in that the reactants and the polar organic solvent are combined individually or in admixture or in solutions at temperatures above 200 ° C with simultaneous removal of water and reacted.

4. A process as claimed in claim 1, characterized in that the reactants and the polar organic solvent are combined individually or in admixture or in solutions in the absence of water and reacted at temperatures above 200 ° C, the reactants and the polar organic solvent being combined either before or during the reaction.

5. A process as claimed in claim 3, characterized in that the reaction is carried out in the absence of water.

6. A process as claimed in claim 1, characterized in that 4-(phenylthio)-diphenyl sulfide is used as the activated aromatic thioether.

7. A process as claimed in claim 1, characterized in that 4,4'-di(phenylthio)diphenylsulfide is used as the activated aromatic thioether.

8. A process as claimed in claim 1, characterized in that 4-benzoyl diphenyl sulfide is used as the activated aromatic thioether.

**Revendications**

1. Procédé pour fabriquer des poly(sulfures d'arylène) éventuellement ramifiés à partir de

a) 50 à 100 moles pour cent d'hydrocarbures aromatiques dihalogénés de formule

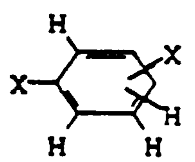

(I),

et 0 à 50 moles pour cent d'hydrocarbures aromatiques dihalogénés de formule

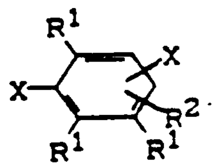

(II),

dans lesquelles

X représente des atomes d'halogène comme le chlore ou le brome se trouvant en position mutuelle méta ou para, et

$R^1$ et $R^2$ sont identiques ou différents et peuvent être l'hydrogène, un groupe alkylaryle en $C_1$-$C_4$, cycloalkyle en $C_5$-$C_{10}$, alkylaryle en $C_6$-$C_{10}$, arylalkyle en $C_7$-$C_{14}$, deux restes $R^1$ se trouvant en position ortho mutuelle pouvant être assemblés de manière à former un noyau aromatique ou hétérocyclique contenant jusqu'à trois hétéroatomes comme N, O, S, et un reste $R^1$ étant en tout cas différent de l'hydrogène,

et

b) 0 à 5 moles pour cent, par rapport à la somme des hydrocarbures aromatiques dihalogénés de formules (I) et (II), d'un hydrocarbure aromatique tri- ou tétrahalogéné de formule (III)

ArXn (III)

dans laquelle

Ar représente un reste aromatique en $C_6$-$C_{14}$ ou un reste hétérocyclique avec 5 à 14 atomes

dans le cycle, dans lequel jusqu'à trois des atomes de carbone du cycle peuvent être remplacés par des hétéroatomes comme N, O, S,

X représente un halogène comme le chlore ou le brome, et

n est égal à 3 ou 4,

et

c) 50 à 100 moles pour cent de sulfure de métal alcalin, éventuellement sous forme de ses hydrates ou de mélanges aqueux, éventuellement ensemble avec de petites quantités d'hydroxydes de métaux alcalins comme l'hydroxyde de sodium et l'hydroxyde de potassium et 0 à 50 moles pour cent de bisulfure de métal alcalin, de préférence l'hydrogénosulfure de sodium et l'hydrogénosulfure de potassium ou un mélange de ces composés, le rapport molaire de (a+b):c se situant dans la plage de 0,75:1 à 1,25:1,

et

d) éventuellement en présence d'accélérateurs de réaction comme les carboxylates de métaux alcalins, les phosphates de métaux alcalins, les phosphonates de métaux alcalins, les fluorures de métaux alcalins, les alkylsulfonates de métaux alcalins, ou en présence de N,N-dialkylcarboxamides, de lactames, d'anhydrides et d'esters d'acides carboxyliques, dans un solvant organique polaire,

caractérisé en ce qu'on ajoute au mélange réactionnel des thioéthers aromatiques activés de formules IV et/ou V

$Ar\text{-}S\text{-}Ar^1$ (IV),

$Ar^1\text{-}S\text{-}Ar^2$ (V),

en quantités de 0,05 à 10,0 moles pour cent, par rapport à la somme des moles des hydrocarbures dihalogénés de formules (I) et (II), les symboles des formules (IV) et (V) possédant les significations suivantes:

Ar un reste aromatique ou hétérocyclique avec 6 à 30 atomes

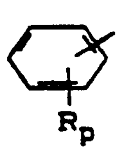 , 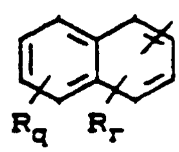 , 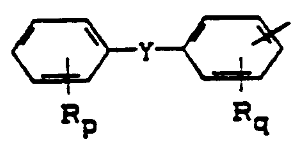 ,

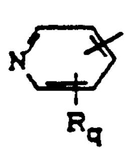 , 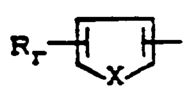 , 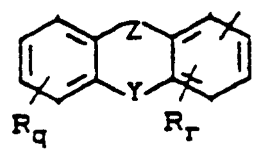 (VI),

et

$Ar^1$ et $Ar^2$ représentent chaque fois indépendamment l'un de l'autre un hydrocarbure aromatique activé, avec 6 à 30 atomes, répondant à la formule (VII)

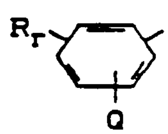 (VII),

dans laquelle les restes R représentent chaque fois indépendamment l'un de l'autre un groupe alkyle en $C_1$-$C_8$,aralkyle/alkaryle en $C_7$-$C_{14}$, cycloalkyle en $C_3$-$C_6$ ou l'hydrogène, et

Z et Y peuvent être identiques ou différents et signifient alkylidène en $C_1$-$C_6$, cycloalkylidène en $C_3$-$C_6$, -CO-, -S-, -$SO_2$, -O-, -NR- ou une liaison simple,

X représente -NR-, -S- ou -O-,

Q représente un substituant organique activant choisi dans le groupe comportant -SAr, -CO-R, - SO-R, -$SO_2$-R, -COOAr, -Ar, -CN et -$CF_3$, Ar et R ayant les significations décrites pour les formules (IV) et (VI), et

P étant égal à 0, 1, 2, 3, 4 ou 5,

q étant égal à 0, 1, 2, 3 ou 4, et
r étant égal à 0, 1, 2 ou 3.

2. Procédé selon la revendication 1, dans lequel on emploie 0,1 à 5 moles pour cent du thioéther aromatique activé répondant à la formule (IV) ou (V).

3. Procédé selon la revendication 1, dans lequel les partenaires réactionnels et le solvant organique polaire sont introduits individuellement ou en mélanges ou en solutions à des températures supérieures à 200 ° C avec déshydratation simultanée, et mis à réagir.

4. Procédé selon la revendication 1, dans lequel les partenaires réactionnels et le solvant organique polaire sont réunis à l'état anhydre, individuellement ou en mélange ou en solution et mis à réagir à des températures supérieures à 200 ° C, la réunion pouvant avoir lieu avant ou pendant la réaction.

5. Procédé selon la revendication 3, dans lequel la réaction est effectuée en l'absence d'eau.

6. Procédé selon la revendication 1, dans lequel on emploie comme thioéther aromatique activé du sulfure de 4-(phénylthio)diphényle.

7. Procédé selon la revendication 1, caractérisé en ce qu'on emploie comme thioéther aromatique activé du sulfure de 4,4'-di(phénylthio)diphényle.

8. Procédé selon la revendication 1, dans lequel on emploie comme thioéther aromatique activé du sulfure de 4-benzoyldiphényle.